# EUROPÄISCHE PATENTANMELDUNG

(11) **EP 0 991 291 A2**
(43) Veröffentlichungstag der Anmeldung: **05.04.2000**
(21) Anmeldenummer: 99118347.6
(22) Anmeldetag: 16.09.1999
(51) Int. Cl.: H04Q 11/04

(54) **Verfahren zum automatischen Aufbau einer Rückrufverbindung**

(30) Priorität: 01.10.1998 DE 19845301
(71) Anmelder: Elsa AG, 52070 Aachen (DE)
(72) Erfinder: Koenzen, Ralf, 52134 Herzogenrath (DE)
(74) Vertreter: Kohlmann, Kai, Dipl.-Ing.

(57) **Zusammenfassung**

Die Erfindung betrifft ein Verfahren zum automatischen Aufbau einer Rückrufverbindung zwischen zwei an ein ISDN-Wählleitungsnetz angeschlossenen Telekommunikationsgeräten A und B, bei dem das Telekommunikationsgerät B einen eingehenden Anruf von Telekommunikationsgerät A nicht annimmt, sondern das Telekommunikationsgerät A unter dessen vom ISDN-Wählleitungsnetz bereitgestellter Rufnummer zurückruft.

## Beschreibung

Die Erfindung betrifft ein Verfahren zum automatischen Aufbau einer Rückrufverbindung zwischen zwei an ein ISDN-Wählleitungsnetz angeschlossenen Telekommunikationsgeräten A und B, bei dem das Telekommunikationsgerät B einen eingehenden Anruf von Telekommunikationsgerät A nicht annimmt, sondern das Telekommunikationsgerät A über deren vom ISDN-Wählleitungsnetz (ISDN: Abkürzung für Integrated Services Digital Network) bereitgestellter Rufnummer identifiziert und unter dieser oder einer hinterlegten Rufnummer zurückruft.

In der Telekommunikation besteht ein Bedürfnis, daß zwei an öffentliche ISDN-Wählleitungsnetze angeschlossene Telekommunikationsgeräte, insbesondere Datenkommunikationsgeräte(z.B. Netzwerk-Router) miteinander eine Wählverbindung aufbauen, um Daten zu übertragen, wobei die eigentliche Verbindung als Rückrufverbindung zustande kommen soll. Das bedeutet, daß das Telekommunikationsgerät A das Telekommunikationsgerät B "anklingelt", und dieses dann das Telekommunikationsgerät A zurückruft. Damit wird erreicht, daß der Angerufene die Gebühren der Verbindung trägt. Außerdem erhöht dieses Verfahren die Zugriffsicherheit, da dem Angerufenen bekannt ist, welche Rückrufnummer gewählt wird.

Solche Rückrufverbindungen werden heute häufig in Verbindung mit ISDN-Routern eingesetzt, wobei grundsätzlich zwischen zwei verschiedene Verfahren zu unterscheiden ist:

Im ersten Fall nimmt Telekommunikationsgerät B den Anruf des Telekommunikationsgeräts A an, und handelt mit den während dieser bereits gebührenpflichtigen Verbindung übertragenen Datenpaketen, die im wesentlichen Informationen zur Identifikation der Gegenstelle beinhalten, den Rückruf aus. Vor dem gebührenpflichtigen Rückruf von B nach A wird die erste Verbindung von A nach B getrennt. Dieses Verfahren wird auch als Inband-Rückruf bezeichnet.

Im zweiten Fall nimmt Telekommunikationsgerät B den Ruf nicht an, sondern erkennt aus der vom ISDN-Wählleitungsnetz bereitgestellten Rufnummer des Anrufers, welche Station gerade "anklingelt" (:=Verbindungsanforderung), und ruft diese zurück. Dieses Verfahren wird auch als Outband-Rückruf bezeichnet. Dieses Verfahren ist Gegenstand der Erfindung.

Das Outband-Rückrufverfahren arbeitet entweder mit sofortigem oder verzögerten Rückruf. Beim sofortigen Rückruf ist einer der beiden B-Kanäle des ISDN-Anschlusses noch mit dem eintreffenden Ruf von A belegt, während der zweite B-Kanal für den Rückruf an das Telekommunikationsgerät A belegt wird. Sollte an dem Basisanschluß für das Telekommunikationsgerät B bereits eine andere Verbindung oder ein andere Verbindungsanforderung bestehen, kann der Rückruf nicht durchgeführt werden. Dies gilt auch, wenn am Basisanschluß von Telekommunikationsgerät A bereits einer der beiden B-Kanäle belegt ist.

Beim verzögerten Rückruf wartet Telekommunikationsgerät B zunächst, bis der Anruf von Telekommunikationsgerät A zurückgenommen wurde. Die Wartezeit muß dabei so lang gewählt werden, daß auch bei einem sehr langsamen Verbindungsauf- bzw. -abbau sichergestellt ist, daß zum Zeitpunkt des Rückrufs bei beiden Telekommunikationsgeräten der für die Verbindungsanforderung benutzte B-Kanal wieder freigegeben ist. Insbesondere im internationalen Datenverkehr über mehrere Vermittlungsstellen dauert es länger, bis Verbindungen auf- und wieder abgebaut sind.

Die Nachteile des Outband-Rückrufverfahrens bestehen darin, daß beim sofortigen Rückruf unnötig B-Kanäle im ISDN-Wählleitungsnetz belegt werden und dies insbesondere an Basisanschlüssen (z.B. bei Telearbeitsplätzen) nicht akzeptabel ist, da durch die häufigen Besetztsituationen (z.B. gleichzeitige Telefonate am gleichen ISDN-Anschluß) ein zuverlässiger Betrieb nicht gegeben ist. Beim verzögerten Rückruf stören insbesondere die langen Wartezeiten von ca. 8-10 Sekunden, bis der B-Kanal beider Stationen mit Sicherheit wieder freigegeben wurde. Ein flüssiger Betriebsablauf (z.B. bei Telearbeitsplätzen) ist damit nicht möglich.

Aus "Dynamically Determining The Appropriate Call Back Number For Disconnect And Call Back Schemes" in: IBM Technical Disclosure Bulletin, Vol. 33 No. 12, May 1991, Seiten 40-42 ist ein Rückrufverfahren für das ISDN-Netz bekannt, bei dem der bestehende ISDN-Kanal für die Rückrufverbindung genutzt wird.

Ferner ist aus Bocker, Peter: ISDN Das diensteintegrierende digitale Nachrichtennetz. Berlin (u.a.): Springer 2. Aufl. 1987, S. 26 ein Verfahren bekannt, das es dem angerufenen Teilnehmer fallweise erlaubt, die Verbindungsgebühren während oder vor der Verbindungsannahme zu übernehmen. Ein Rückruf wird hierzu regelmäßig nicht aufgebaut.

Ausgehend von diesem Stand der Technik liegt der Erfindung daher die Aufgabe zugrunde, ein Verfahren der eingangs erwähnten Art zu schaffen, das sowohl die Nachteile des Outband-Rückrufverfahrens mit sofortigem oder verzögerten Rückruf vermeidet.

Die Lösung dieser Aufgabe basiert auf dem Gedanken, daß nur eindeutige Absprachen zwischen den Telekommunikationsgeräten A und B die oben genannten Nachteile vermeiden können. Hierzu zweckentfremdet das erfindungsgemäße Verfahren teilweise die vom ISDN-Wählleitungsnetz bereitgestellten Messages, nämlich Setup, Alerting und Release, die sämtlich aus den ETSI Spezifikationen für ISDN bekannt sind. Hierzu wird auch auf die DIN ETS 300 102 Teil 1, Februar 1992, Seiten 4,17-29 hingewiesen.

Im einzelnen wird die Aufgabe durch die Merkmale des Anspruchs 1 gelöst. Die Verfahrensvorschriften können in Form von Software in den an dem jeweiligen Kommunikationsvorgang beteiligten Telekommunikationsgeräten implementiert sein.

Insbesondere eignet sich das Verfahren zum Herstellen von Rückrufverbindungen zwischen Netzwerk-Routern.

Um Rückrufe an beliebige Telekommunikationsgeräte zu verhindern, erfolgt der Rückruf an das Telekommunikationsgerät A erst dann, wenn die Rufnummer des Telekommunikationsgerätes A als zulässig vom Telekommunikationsgerät B identifiziert wurde. Dies kann beispielsweise durch einen Vergleich der Rückrufnummer mit abgespeicherten Rufnummern im Telekommunikationsgerät B realisiert werden.

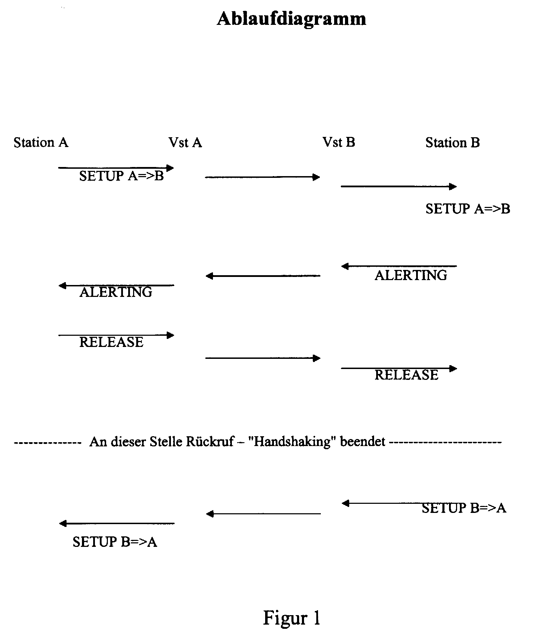

Nachfolgend wird die Erfindung an Hand eines in Figur 1 dargestellten Ablaufdiagramms näher erläutert.

Unter Verwendung der vom ISDN-Wählleitungsnetz bereitgestellten Messages, nämlich Setup, Alerting und Release wird die Rückrufverbindung wie folgt aufgebaut:

Station A wählt Station B an. Hierbei generiert Station A die Setup-Message und übermittelt diese an eine Vermittlungsstelle A (Vst A) des ISDN-Wählleitungsnetzes.

Die Station B empfängt die Setup-Message von der Vermittlungsstelle B (Vst B) und identifiziert die anrufende Station A mittels der vom ISDN-Wählleitungsnetz bereitgestellten Rufnummer von Station A.

Aufgrund des eingehenden Anrufs generiert die angerufene Station B die Alerting-Message im ISDN-Wählleitungsnetz in entgegengesetzter Richtung von Station B nach A. Dabei nimmt Station B den eingehenden Anruf aber nicht an.

Vom ISDN-Wählleitungsnetz erhält die anrufende Station A diese Alerting-Message und löst mit einer Release-Message die zwischen den Stationen A und B bestehende Verbindungsanforderung aus.

Die angerufene Station B erhält über die Vermittlungsetellen A, B anschließend die vom ISDN-Wählleitungsnetz bereitgestellte Release Message, mit der Folge, daß der für die Verbindungsanforderung benutzte ISDN-Kanal wieder freigegeben ist.

Unmittelbar im Anschluß an den Eingang der Release-Message bei Station B erfolgt der Rückruf an die Station A, wie durch die Setup-Message B⇒A in dem Ablaufdiagramm angedeutet.

Da zur Zeit des Rückrufs der Station A der für die Verbindungsanforderung benutzte ISDN-Kanal wieder freigegeben ist, kann Station B einen ganz normalen Anruf (den eigentlichen Rückruf) zur Station A durchführen. Eine Notwendigkeit Wartezeiten zu implementieren besteht nicht. Der Rückruf kann daher direkt durchgeführt werden, ohne daß ein zweiter ISDN-Kanal belegt wird. Im nationalen Betrieb sind mit Hilfe der Erfindung Rückzeiten für den Aufbau der Rückrufverbindung von 1-2 Sekunden möglich. Die kurzen Aufbauzeiten fördern die Akzeptanz von Rückrufverbindungen bei den Anwendern erheblich.

## Patentansprüche

1. Verfahren zum automatischen Aufbau einer Rückrufverbindung zwischen zwei an ein ISDN-Wählleitungsnetz angeschlossenen Telekommunikationsgeräten A und B, bei dem das Telekommunikationsgerät B einen eingehenden Anruf von Telekommunikationsgerät A nicht annimmt, sondern das Telekommunikationsgerät A über deren vom ISDN-Wählleitungsnetz bereitgestellter Rufnummer identifiziert und unter dieser oder einer hinterlegten Rufnummer zurückruft, **dadurch gekennzeichnet**, daß unter Verwendung der vom ISDN-Wählleitungsnetz bereitgestellten Messages, nämlich Setup, Alerting und Release die Rückrufverbindung wie folgt aufgebaut wird:
- bei der Anwahl des Telekommunikationsgeräts B durch das Telekommunikationsgerät A generiert dieses die Setup-Message und übermittelt diese an das ISDN-Wählleitungsnetz,
- das Telekommunikationsgerät B identifiziert das anrufende Telekommunikationsgerät A mittels der vom ISDN-Wählleitungsnetz bereitgestellten Rufnummer
- aufgrund des eingehenden Anrufs generiert das angerufene Telekommunikationsgerät B die Alerting-Message an das ISDN-Wählleitungsnetz
- vom ISDN-Wählleitungsnetz erhält das anrufende Telekommunikationsgerät A die Alerting-Message und löst mit einer Release-Message die zwischen den Telekommunikationsgeräten A und B bestehende Verbindungsanforderung aus,
- das angerufene Telekommunikationsgerät B erhält anschließend vom ISDN-Wählleitungsnetz die Release Message, mit der Folge, daß der für die Verbindungsanforderung benutzte ISDN-Kanal wieder freigegeben ist und
- unmittelbar im Anschluß an den Eingang der Release-Message bei Telekommunikationsgerät B erfolgt der Rückruf von Telekommunikationsgerät B an das Telekommunikationsgerät A.

2. Verfahren nach Anspruch 1, **dadurch gekennzeichnet**, daß die Rückrufverbindung zwischen Datenkommunikationsgeräten A und B aufgebaut wird.

3. Verfahren nach Anspruch 2, **dadurch gekennzeichnet**, daß die Rückrufverbindung zwischen Netzwerk-Routern A und B aufgebaut wird.

4. Verfahren nach einem der Ansprüche 1 bis 3, **dadurch gekennzeichnet**, daß der Rückruf an das Telekommunikationsgerät A erst erfolgt, wenn die Rufnummer des Telekommunikationsgerätes A als zulässig vom Telekommunikationsgerät B identifiziert wurde.
